# EUROPEAN PATENT APPLICATION

(11) **EP 4 002 157 A1**
(43) Date of publication of application: **25.05.2022**
(21) Application number: 21208044.4
(22) Date of filing: 12.11.2021
(51) Int. Cl.: G06F 16/335

(54) **METHOD AND SYSTEM FOR IDENTIFYING USER SEARCH SCENARIO**

(30) Priority: 16.11.2020 CN 202011278824
(71) Applicant: Shenzhen Sekorm Component Network Co., Ltd, Shenzhen, Guangdong (CN)
(72) Inventor: LU, Zaiwu, Shenzhen (CN)
(74) Representative: Westphal, Mussgnug & Partner, Patentanwälte mbB

(57) **Abstract**

The present invention discloses a method and a system for identifying user search scenario. The method includes the following steps: receiving a search text and finding out one or multiple valid word elements in the search text; subjecting the valid word elements to level filtering and category filtering to obtain valuable word elements having a single category; and setting up a corresponding search scenario tag for the search text according to the category or a category combination of the valuable word elements. Implementation of the present invention extracts data that are necessary to a user from a massive amount of data in a user search scenario, accurately identifies the user's search demand, searches out corresponding contents for the user, quickly resolves the user's demand, and improves user's experience of search.

## Description

### FIELD OF THE INVENTION

The present invention relates to the field of computer search technology, and more particularly to a method and a system for identifying user search scenario.

### DESCRIPTION OF THE RELATED ART

With the progress of the Internet technology, a massive amount of information emerges every day in the world where we live. The speed of growth of the information is increased exponentially. In the era of information explosion, due to lacking of management or poor management of the information, distribution and transmission of the information are out of control and a large amount of fake information and useless information are generated, leading to contamination of the information environment and generation of "information garbage". Since everyone is entitled to express his or her opinions in networks, and since the cost for publication is almost negligible, in some ways, every person can be an information producer in the scope of the entire world, and this increases the difficulty for people to use the information.

### SUMMARY OF THE INVENTION

The technical issue that the present invention aims to resolve is to provide, in view of the above-described deficiency of the prior art, a method and a system for identifying user search scenario.

The technical solution that the present invention adopts to resolve the technical issue is to construct a method for identifying user search scenario, which comprises the following steps:
receiving a search text and finding out one or multiple valid word elements in the search text;
subjecting the valid word elements to level filtering and category filtering to obtain valuable word elements having a single category; and
setting up a corresponding search scenario tag for the search text according to the category or a category combination of the valuable word elements.

Preferably, in the method for identifying user search scenario described according to the present invention, the step of receiving a search text and finding out one or multiple valid word elements in the search text comprises:
receiving the search text and finding out one or multiple word elements in the search text; and
subjecting the found word elements to word element filtering according to multiple pre-stored valid word elements to obtain the one or multiple valid word elements.

Preferably, in the method for identifying user search scenario described according to the present invention, the step of subjecting the valid word elements to level filtering comprises:
pre-setting a word element level tag for each pre-stored valid word element according to a word element search value; and
subjecting the found valid word elements to the level filtering according to a sequence of the word element level tags to obtain valuable word elements.

Preferably, in the method for identifying user search scenario described according to the present invention, the step of subjecting the valid word elements to category filtering comprises:
pre-setting one or multiple categories and a corresponding category level tag for each pre-stored valid word element according to a category search value;
subjecting the found valid word elements that have multiple categories to the category filtering according to a sequence of the category level tags, preserving a single category.

Preferably, in the method for identifying user search scenario described according to the present invention, the step of subjecting the found valid word elements that have multiple categories to the category filtering according to the sequence of the category level tags, and preserving a single category comprises:
performing grouping according to the categories of the found valid word elements, and determining whether identical valid word elements are present in each group, and if yes, subjecting the found valid word elements that have multiple categories to the category filtering according to the sequence of the category level tags, and preserving a single category.

The present invention also constructs a system for identifying user search scenario, which comprises:
a word element finding-out module, which is configured to receive a search text and find out one or multiple valid word elements in the search text;
a word element analysis module, which is configured to subject the valid word elements to level filtering and category filtering to obtain valuable word elements having a single category; and
a search scenario set-up module, which is configured to set up a corresponding search scenario tag for the search text according to the category or a category combination of the valuable word elements.

Preferably, in the system for identifying user search scenario described according to the present invention, the system further comprises: a valid word element storage module, which is configured to pre-store multiple valid word elements; and
the word element finding-out module being configured to receive the search text and find out the one or multiple word elements in the search text; and subject the found word elements to word element filtering according to the multiple pre-stored valid word elements to obtain the one or multiple valid word elements.

Preferably, in the system for identifying user search scenario described according to the present invention, the system further comprises: a word element level set-up module, which is configured to pre-set a word element level tag for each pre-stored valid word element according to a word element search value; and

the word element analysis module comprising: a word element filtering module, which is configured to subject the found valid word elements to the level filtering according to a sequence of the word element level tags set up by the word element level set-up module to obtain valuable word elements.

Preferably, in the system for identifying user search scenario described according to the present invention, the system further comprises: a word element category set-up module, which is configured to pre-set one or multiple categories and a corresponding category level tag for each pre-stored valid word element according to a category search value; and
the word element analysis module comprising:
a category filtering module, which is configured to subject the found valid word elements that have multiple categories to the category filtering according to a sequence of the category level tags, and preserve a single category.

Preferably, in the system for identifying user search scenario described according to the present invention, the word element analysis module further comprises:
a word element grouping module, which is configured to perform grouping according to the categories of the found valid word elements and determine whether identical valid word elements are present in each group, and if yes, execute the category filtering module.

Implementation of the present invention provides the following beneficial effects:

By means of receiving a search text and finding out one or multiple valid word elements in the search text; subjecting the valid word elements to level filtering and category filtering to obtain valuable word elements having a single category; and setting up a corresponding search scenario tag for the search text according to the category or a category combination of the valuable word elements, the present invention extracts data that are necessary to a user from a massive amount of data in a user search scenario, accurately identifies the user's search demand, searches out corresponding contents for the user, quickly resolves the user's demand, and improves user's experience of search.

### BRIEF DESCRIPTION OF THE DRAWINGS

A detailed description of the present invention will be provided below with reference to the attached drawings and embodiments. In the drawings:
FIG 1 is a flow chart illustrating a method for identifying user search scenario according to the present invention;
FIG. 2 is a detailed flow chart illustrating the method for identifying user search scenario according to the present invention; and
FIG. 3 is a block diagram illustrating a system for identifying user search scenario according to the present invention.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

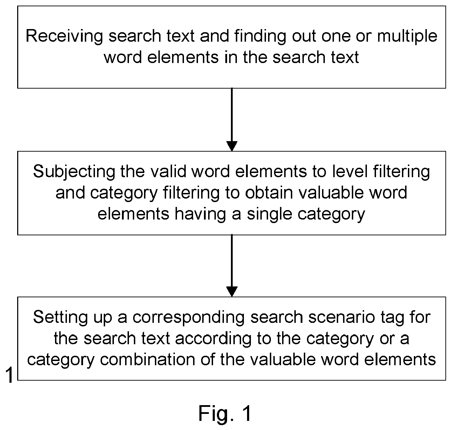

In a first embodiment, as shown in FIG. 1, the present invention constructs a method for identifying user search scenario, which comprises the following steps:
receiving a search text and finding out one or multiple valid word elements in the search text;
subjecting the valid word elements to level filtering and category filtering to obtain valuable word elements having a single category; and
setting up a corresponding search scenario tag for the search text according to the category or a category combination of the valuable word elements.

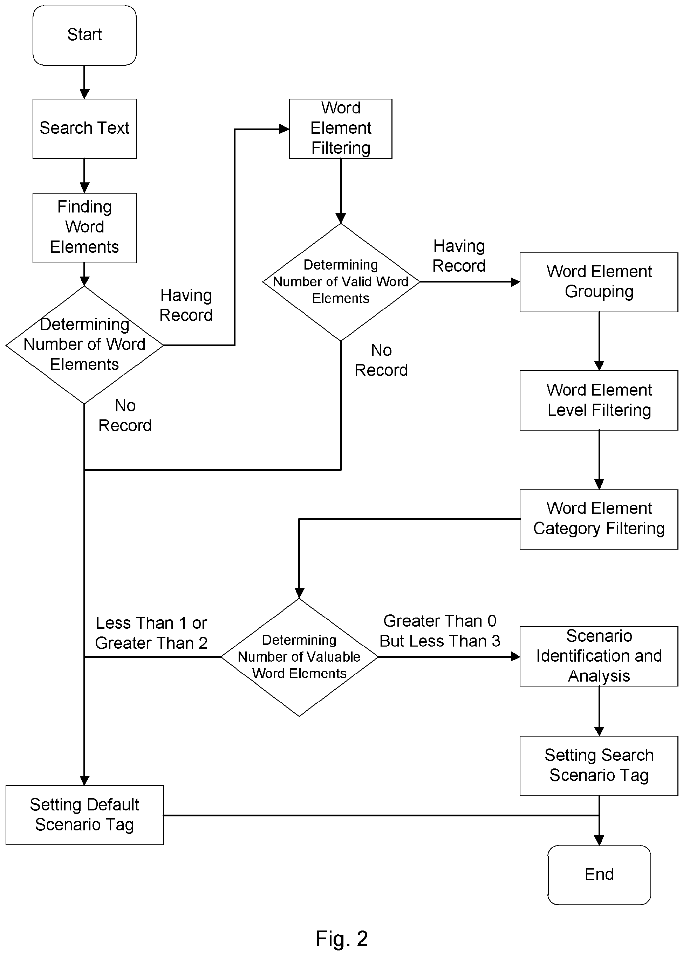

In the instant embodiment, as shown in FIG. 2, the step of receiving a search text and finding out one or multiple valid word elements in the search text comprises:
receiving the search text and finding out one or multiple word elements in the search text; and
subjecting the found word elements to word element filtering according to multiple pre-stored valid word elements to obtain the one or multiple valid word elements.

Specifically, the search text includes search words, search terms, search phrases, punctuation-included search phrases in computer language; the word element is a word or a term in the computer language; the valid word element is a word or term in the computer language that is pre-stored in the system, which is set up according to search habits, records, popularity, database data, nouns, and verbs.

For example, for the search text "type of transducer", a computer receives the search text and converts the search text into a computer language, the one or multiple word elements found in the search text include "transducer", "of', and "type". For search accuracy, the system is pre-stored with multiple valid word elements for determining the usefulness of a word element for search, and word elements that are useless for search are filtered out by means of the pre-stored valid word elements, and word elements that are useful for search are preserved. For example, terms that express no meaning, such as "of' in the found word elements, are identified as word elements that are useless for search, and the valid word elements, such as "transducer" and "type" are preserved.

In the instant embodiment, the step of subjecting the valid word elements to level filtering comprises:
pre-setting a word element level tag for each pre-stored valid word element according to a word element search value; and
subjecting the found valid word elements to the level filtering according to a sequence of the word element level tags to obtain valuable word elements.

Specifically, the word element search value refers to a weight obtained by the system based on search habits, search records, search popularity, and database data, indicating a search hotspot degree or a data hotspot degree of the word element, and thus, each pre-stored valid word element is provided with a preset word element level tag, such as level 1, level 2, and level 3. The higher the level, the higher the search value of the word element. When the system finds out a multiplicity of valid word element, excessiveness of the word elements would affect the search accuracy, and thus, the found valid word elements can be subjected to the level filtering according to a sequence of the word element level tags to obtain the valuable word elements. In some embodiments, it is possible to set up conditions for the level filtering. For example, for one specific level of the sequence of level tags, the valid word elements that are lower than the level are filtered out, and the word elements that are higher than the level are preserved as the valuable word element. For example, for four valid word elements being found, and the word element level tags thereof being respectively level 1, level 2, level 3, and level 4, a preset level filtering condition is level 2, so that the word elements that are higher than level 2 are the valuable word elements.

In the instant embodiment, the step of subjecting the valid word elements to category filtering comprises:
pre-setting one or multiple categories and a corresponding category level tag for each pre-stored valid word element according to a category search value;
subjecting the found valid word elements that have multiple categories to the category filtering according to a sequence of the category level tags, and preserving a single category.

The found valid word elements may be first subjected to the level filtering according to the sequence of the word element level tags to obtain the valuable word elements; and then, the found valuable word elements having multiple categories are subjected to the category filtering according to the sequence of the category level tags, and preserving a single category, to obtain valuable word elements having a single category.

Further, it is also possible to first subject the found valid word elements having multiple categories to the category filtering according to the sequence of the category level tags, and preserving a single category; and then, the found valid word elements are subjected to the level filtering according to the sequence of the word element levels for preservation of the valuable word elements to eventually obtain valuable word elements having a single category.

Specifically, category indicates a category of word elements; the category search value refers to a weight obtained by the system according to search habits, search records, search popularity, and database data, indicating a search hotspot degree or a data hotspot degree of the category, and thus, each pre-stored valid word element is provided with one or multiple preset categories and a corresponding category level tag, such as level 1, level 2, and level 3. The higher the level, the higher the search value of the category. Further, for example, model term > class term > brand term > application term > resources term.

In some embodiments, said "subjecting the found valid word elements that have multiple categories to the category filtering according to the sequence of the category level tags, and preserving a single category" comprises:
in case that multiple valid word elements are found, performing grouping according to the categories of the found valid word elements, and determining whether identical valid word elements are present in each group, and if yes, subjecting the found valid word elements that have multiple categories to the category filtering according to the sequence of the category level tags, and preserving a single category, namely preserving the category of the highest level; further, before or after grouping, the found valid word elements are subjected to the level filtering according to the sequence of the word element level tags to obtain the valuable word elements.

In some embodiments, said "subjecting the found valid word elements that have multiple categories to the category filtering according to the sequence of the category level tags, and preserving a single category" comprises:
in case that the valid word elements are found, acquiring a number of categories to which the valid word elements correspond, and subjecting the found valid word elements that have multiple categories to the category filtering according to the sequence of the category level tags, and preserving a single category, namely preserving the category of the highest level.

In some other embodiments, it is also possible to preset one or multiple preset categories and corresponding correlation with other categories for each pre-stored valid word element according to category correlation; and
subject the found valid word elements to the level filtering and ranking according to the sequence of the word element level tags to obtain the valuable word elements, including the word elements having the highest value and other valuable word elements.

The way of grouping or counting implemented in the above two embodiments can be used to subject the word elements that have multiple categories and the highest value to the category filtering according to the sequence of the category level tags, so as to preserve a single category. Specifically, when the valuable word elements are found, grouping is performed according to the categories of the found valuable word elements, and determination is made as to whether word elements that have the highest value are commonly present in each group, and if yes, the found word elements that have multiple categories and the highest value are subjected to the category filtering according to the category level tags, so as to preserve a single category, namely preserve the category of the highest level. Or alternatively, when the word elements having the highest value are found, a number of categories to which the word elements having the highest value corresponds is acquired, and the word elements that have multiple categories and the highest value are subjected to the category filtering according to the category level tags, so as to preserve a single category, namely preserve the category of the highest level;

In addition, the categories of other valuable word elements are subjected to filtering according to the correlation between the category of the word elements having the highest value and other categories, to obtain a single category of the other valuable word elements that is most correlated to the category of the word elements having the highest value.

For example, a search text inputted by a user is "Rice mobile phone", and since the valid word element "Rice" possesses a category of brand and a category of food, and the valid word element "mobile phone" possesses a category of product class, when the level of the valid word element of "mobile phone" is the highest, the correlation of the category of the word element that has the highest value and the other categories, namely correlation between product class and brand, and correlation between product class and food, can be applied to determine which one of the categories of "Rice" is most correlated to the category of "mobile phone". For example, the category of brand for "Rice" is most correlated to the category of product class for "mobile phone".

In the instant embodiment, as shown in FIG. 2, the method for identifying user search scenario further comprises:
determining whether a number of the word elements or the valid word elements is zero or not, and if yes, setting up a preset default scenario tag for the search text; and if no, subjecting the valid word elements to the level filtering and the category filtering, to obtain the valuable word elements having a single category; and
determining whether a number of the valuable word elements meets a preset condition, and if yes, setting up a preset default scenario tag for the search text; and if no, setting up a corresponding search scenario tag for the search text according to the category or a category combination of the valuable word elements. In some embodiments, determination is made concerning whether the number of the valuable word elements is less than 1 or greater than 2, and if yes, setting up a preset default scenario tag for the search text; and if no, setting up a corresponding search scenario tag for the search text according to the category or a category combination of the valuable word elements. Specifically, determination is first made as to the number of the valuable word elements, and if a total number of the valuable word elements is greater than 2 or less than 1, the default scenario tag, namely a regular scenario, is directly assigned. If the total number of the valuable word elements is equal to 1, a search scenario tag is assigned according to the category of the valuable word elements (brand term = brand scenario; application term = application term scenario; class term = class term scenario; model term = model term scenario), and if the total number of the valuable word element is equal to 2, a search scenario tag is assigned according to a category combination of the valuable word element (brand term + supply resources term = brand + supply resources term scenario; brand term + sales resources term = brand + sales resources term scenario; brand term + contents resources term = brand + contents resources term scenario; brand term + class term = brand + class scenario; application term + class term = application + class scenario; class term + contents resources term = class + contents resources term scenario; model term + contents resources term = model + contents resources term scenario; model term + supply resources term = model + supply resources term scenario).

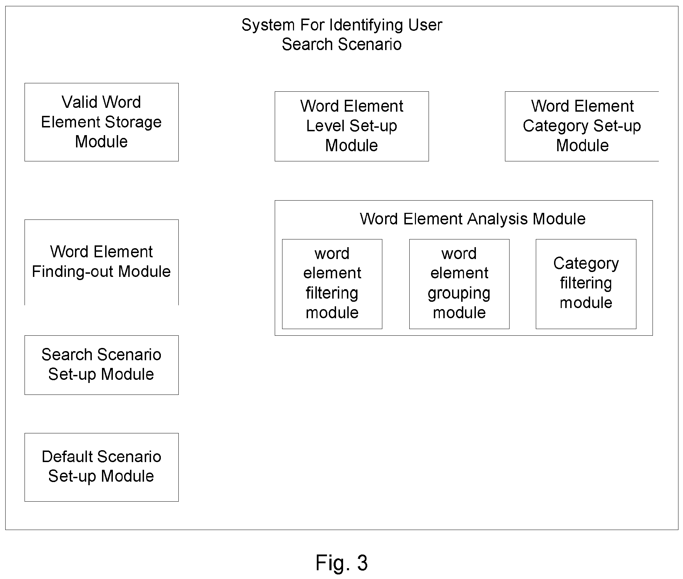

In a second embodiment, as shown in FIG. 3, the present invention also constructs a system for identifying user search scenario, which comprises:
a word element finding-out module, which is configured to receive a search text and find out one or multiple valid word elements in the search text;
a word element analysis module, which is configured to subject the valid word elements to level filtering and category filtering to obtain valuable word elements having a single category; and
a search scenario set-up module, which is configured to set up a corresponding search scenario tag for the search text according to the category or a category combination of the valuable word elements.

In the instant embodiment, the system further comprises: a valid word element storage module, which is configured to pre-store multiple valid word elements; and
the word element finding-out module being configured to receive the search text and find out the one or multiple word elements in the search text; and subject the found word elements to word element filtering according to the multiple pre-stored valid word elements to obtain the one or multiple valid word elements.

Specifically, the search text includes search words, search terms, search phrases, punctuation-included search phrases in computer language; the word element is a word or a term in the computer language; the valid word element is a word or term that is a system-pre-stored word or term set up according to search habits, records, popularity, database data, nouns, and verbs in the computer language.

For example, for the search text "type of transducer", a computer receives the search text and converts the search text into a computer language, and the one or multiple word elements found in the search text include "transducer", "of', and "type". For search accuracy, the system is pre-stored with multiple valid word elements for determining the usefulness of a word element for search, and word elements that are useless for search are filtered out by means of the pre-stored valid word elements, and word elements that are useful for search are preserved. For example, terms that express no meaning, such as "of' in the found word elements, are identified as word elements that are useless for search, and the valid word elements, such as "transducer" and "type" are preserved.

In the instant embodiment, the system further comprises: a word element level set-up module, which is configured to pre-set a word element level tag for each pre-stored valid word element according to a word element search value.

The word element analysis module comprises: a word element filtering module, which is configured to subject the found valid word elements to the level filtering according to the sequence of the word element level tags set up by the word element level set-up module to obtain valuable word elements.

Specifically, the word element search value refers to a weight obtained by the system based on search habits, search records, search popularity, and database data, indicating a search hotspot degree or a data hotspot degree of the word element, and thus, each pre-stored valid word element is provided with a preset word element level tag, such as level 1, level 2, and level 3. The higher the level, the higher the search value of the word element. When the system finds out a multiplicity of valid word element, excessiveness of the word elements would affect the search accuracy, and thus, the found valid word elements can be subjected to the level filtering according to a sequence of the word element level tags to obtain the valuable word elements. In some embodiments, it is possible to set up conditions for the level filtering. For example, for one specific level of the sequence of level tags, the valid word elements that are lower than the level are filtered out, and the word elements that are higher than the level are preserved and are kept as the valuable word element. For example, for four valid word elements being found, and the word element level tags thereof being respectively level 1, level 2, level 3, and level 4, a preset level filtering condition is level 2, so that the word elements that are higher than level 2 are the valuable word elements.

The system further comprises: a word element category set-up module, which is configured to pre-set one or multiple categories and a corresponding category level tag for each pre-stored valid word element according to a category search value.

The word element analysis module comprises: a category filtering module, which is configured to subject the found valid word elements that have multiple categories to the category filtering according to the sequence of the category level tags, so as to preserve a single category.

The word element filtering module is executed first such that the found valid word elements are subject to the level filtering according to the sequence of the word element level tags to obtain the valuable word elements; and then, the category filtering module is executed such that the found valuable word elements having multiple categories are subject to the category filtering according to the sequence of the category level tags, with a single category being preserved, to obtain valuable word elements having a single category.

Further, it is also possible to first execute the category filtering module to subject the found valid word elements having multiple categories to the category filtering according to the sequence of the category level tags, so as to preserve a single category; and then, the word element filtering module is executed such that the found valid word elements are subject to the level filtering according to the sequence of the word element levels for preservation of the valuable word elements to eventually obtain valuable word elements having a single category.

Specifically, category indicates a category of word elements; the category search value refers to a weight obtained by the system according to search habits, search records, search popularity, and database data, indicating a search hotspot degree or a data hotspot degree of the category, and thus, each pre-stored valid word element is provided with one or multiple preset categories and a corresponding category level tag, such as level 1, level 2, and level 3. The higher the level, the higher the search value of the category. Further, for example, model term > class term > brand term > application term > resources term.

In some embodiments, the word element analysis module further comprises: a word element grouping module, which is configured to perform grouping according to the categories of the found valid word elements and determine whether identical valid word elements are present in each group, and if yes, execute the category filtering module for subjecting the found valid word elements that have multiple categories to the category filtering according to the sequence of the category level tags, so as to preserve a single category, namely preserve the category of the highest level. Further, before or after grouping, the word element filtering module is executed, such that the found valid word elements are subjected to the level filtering according to the sequence of the word element level tags to obtain the valuable word elements.

In some embodiments, the category filtering module is also configured such that in case that the valid word elements are found, a number of categories to which the valid word elements correspond is acquired, and the found valid word elements that have multiple categories are subjected to the category filtering according to the sequence of the category level tags, so as to preserve a single category, namely preserve the category of the highest level.

In some other embodiments, the word element category set-up module is further configured to provide each pre-stored valid word element with one or multiple preset categories and a corresponding correlation thereof with other categories according to category correlation; and
the word element filtering module being configured to subject the found valid word elements to the level filtering and ranking according to the sequence of the word element level tags to obtain the valuable word elements, including the word elements having the highest value and other valuable word elements;
in the same way of grouping or counting implemented in the above two embodiments, the category filtering module being configured to subject the word elements that have multiple categories and the highest value to the category filtering according to the sequence of the category level tags, so as to preserve a single category. Specifically, the word element grouping module is configured such that in case that the valuable word elements are found, grouping is performed according to the categories of the found valuable word elements, and determination is made as to whether word elements that have the highest value are commonly present in each group, and if yes, the category filtering module is executed such that the found word elements that have multiple categories and the highest value are subjected to the category filtering according to the category level tags, so as to preserve a single category, namely preserve the category of the highest level. Or alternatively, the category filtering module is configured such that in case that the word elements having the highest value are found, a number of categories to which the word elements having the highest value corresponds is acquired, and the word elements that have multiple categories and the highest value are subjected to the category filtering according to the category level tags, so as to preserve a single category, namely preserve the category of the highest level;

In addition, the category filtering module is further configured such that the categories of other valuable word elements are subjected to filtering according to the correlation between the category of the word elements having the highest value and other categories, to obtain a single category of the other valuable word elements that is most correlated to the category of the word elements having the highest value.

For example, a search text inputted by a user is "Rice mobile phone", and since the valid word element "Rice" possesses a category of brand and a category of food, and the valid word element "mobile phone" possesses a category of product class, when the level of the valid word element of "mobile phone" is the highest, the correlation between the category of the word element that has the highest value and the other categories, namely correlation between product class and brand, and correlation between product class and food, can be applied to determine which one of the categories of "Rice" is most correlated to the category of "mobile phone". For example, the category of brand for "Rice" is most correlated to the category of product class for "mobile phone".

In the instant embodiment, the system further comprises: a default scenario set-up module, which is configured to determine whether a number of the word elements or the valid word elements is zero or not, and if yes, set up a preset default scenario tag for the search text; and if no, execute the word element analysis module.

The default scenario set-up module is further configured to determine whether a number of the valuable word elements meets a preset condition, and if yes, set up a preset default scenario tag for the search text; and if no, execute the word element analysis module. In some embodiments, determination is made concerning whether the number of the valuable word elements is less than 1 or greater than 2, and if yes, a preset default scenario tag is set up for the search text; and if no, a corresponding search scenario tag is set up for the search text according to the category or a category combination of the valuable word elements. Specifically, determination is first made as to the number of the valuable word elements, and if a total number of the valuable word elements is greater than 2 or less than 1, the default scenario tag, namely a regular scenario, is directly assigned. If the total number of the valuable word elements is equal to 1, a search scenario tag is assigned according to the category of the valuable word elements (brand term = brand scenario; application term = application term scenario; class term = class term scenario; model term = model term scenario), and if the total number of the valuable word element is equal to 2, a search scenario tag is assigned according to a category combination of the valuable word element (brand term + supply resources term = brand + supply resources term scenario; brand term + sales resources term = brand + sales resources term scenario; brand term + contents resources term = brand + contents resources term scenario; brand term + class term = brand + class scenario; application term + class term = application + class scenario; class term + contents resources term = class + contents resources term scenario; model term + contents resources term = model + contents resources term scenario; model term + supply resources term = model + supply resources term scenario).

Implementation of the present invention provides the following beneficial effects:

By means of receiving a search text and finding out one or multiple valid word elements in the search text; subjecting the valid word elements to level filtering and category filtering to obtain valuable word elements having a single category; and setting up a corresponding search scenario tag for the search text according to the category or a category combination of the valuable word elements, the present invention extracts data that are necessary to a user from a massive amount of data in a user search scenario, accurately identifies the user's search demand, searches out corresponding contents for the user, quickly resolves the user's demand, and improves user's experience of search.

It is appreciated that the above embodiments provide only preferred ways for implementing the present invention, of which the description is specific and in detail, yet it should not be construed as being limitative to the scope of the claims of the present invention; and it is noted that those having ordinary skills of the art may realize combinations of the above-described features of the present invention without limitation and may also contemplate certain variations and improvements without departing the concept of the present invention, all these being considered belonging to the protection scope of the present invention; and thus, equivalent substitutes and modifications realized according to the claims of the present invention are all within the scope of coverage defined by the claims of the present invention.

## Claims

1. A method for identifying user search scenario, **characterized by** comprising the following steps:
receiving a search text and finding out one or multiple valid word elements in the search text;
subjecting the valid word elements to level filtering and category filtering to obtain valuable word elements having a single category; and
setting up a corresponding search scenario tag for the search text according to the category or a category combination of the valuable word elements.

2. The method for identifying user search scenario according to claim 1, **characterized in that** the step of receiving a search text and finding out one or multiple valid word elements in the search text comprises:
receiving the search text and finding out one or multiple word elements in the search text; and
subjecting the found word elements to word element filtering according to multiple pre-stored valid word elements to obtain the one or multiple valid word elements.

3. The method for identifying user search scenario according to claim 1 or 2, **characterized in that** the step of subjecting the valid word elements to level filtering comprises:
pre-setting a word element level tag for each pre-stored valid word element according to a word element search value; and
subjecting the found valid word elements to the level filtering according to a sequence of the word element level tags to obtain valuable word elements.

4. The method for identifying user search scenario according to claim 1 or 2, **characterized in that** the step of subjecting the valid word elements to category filtering comprises:
pre-setting one or multiple categories and a corresponding category level tag for each pre-stored valid word element according to a category search value;
subjecting the found valid word elements that have multiple categories to the category filtering according to a sequence of the category level tags, preserving a single category.

5. The method for identifying user search scenario according to claim 4, **characterized in that** the step of subjecting the found valid word elements that have multiple categories to the category filtering according to the a sequence of category level tags, and preserving a single category comprises:
performing grouping according to the categories of the found valid word elements, and determining whether identical valid word elements are present in each group, and if yes, subjecting the found valid word elements that have multiple categories to the category filtering according to the sequence of the category level tags, and preserving a single category.

6. A system for identifying user search scenario, **characterized by** comprising:
a word element finding-out module, which is configured to receive a search text and find out one or multiple valid word elements in the search text;
a word element analysis module, which is configured to subject the valid word elements to level filtering and category filtering to obtain valuable word elements having a single category; and
a search scenario set-up module, which is configured to set up a corresponding search scenario tag for the search text according to the category or a category combination of the valuable word elements.

7. The system for identifying user search scenario according to claim 6, **characterized in that** the system further comprises: a valid word element storage module, which is configured to pre-store multiple valid word elements; and
the word element finding-out module being configured to receive the search text and find out the one or multiple word elements in the search text; and subject the found word elements to word element filtering according to the multiple pre-stored valid word elements to obtain the one or multiple valid word elements.

8. The system for identifying user search scenario according to claim 6 or 7, **characterized in that** the system further comprises: a word element level set-up module, which is configured to pre-set a word element level tag for each pre-stored valid word element according to a word element search value; and
the word element analysis module comprising: a word element filtering module, which is configured to subject the found valid word elements to the level filtering according to a sequence of the word element level tags set up by the word element level set-up module to obtain valuable word elements.

9. The system for identifying user search scenario according to claim 6 or 7, **characterized in that** the system further comprises: a word element category set-up module, which is configured to pre-set one or multiple categories and a corresponding category level tag for each pre-stored valid word element according to a category search value; and
the word element analysis module comprising:
a category filtering module, which is configured to subject the found valid word elements that have multiple categories to the category filtering according to a sequence of the category level tags, and preserve a single category.

10. The system for identifying user search scenario according to claim 9, **characterized in that** the word element analysis module further comprises:
a word element grouping module, which is configured to perform grouping according to the categories of the found valid word elements and determine whether identical valid word elements are present in each group, and if yes, execute the category filtering module.
